Europäisches Patentamt

European Patent Office

Office européen des brevets

(19)

(11) Veröffentlichungsnummer: **0 298 072**
**B1**

(12) # EUROPÄISCHE PATENTSCHRIFT

(45) Veröffentlichungstag der Patentschrift:
29.08.90

(21) Anmeldenummer: 88890147.7

(22) Anmeldetag: **13.06.88**

(51) Int. Cl.⁵: **B62B 3/00,** B61D 47/00,
B65D 90/00

(54) Verfahren zum Transport von Mitgepäckstücken auf der Bahn und Vorrichtung dazu.

(30) Priorität: 03.07.87  AT 1679/87

(43) Veröffentlichungstag der Anmeldung:
04.01.89 Patentblatt 89/1

(45) Bekanntmachung des Hinweises auf die Patenterteilung:
29.08.90 Patentblatt 90/35

(84) Benannte Vertragsstaaten:
BE CH DE ES FR GB IT LI NL

(56) Entgegenhaltungen:
GB-A- 347 016
US-A- 1 765 591
US-A- 3 522 954

(73) Patentinhaber: Austria Metall Aktiengesellschaft,
A-5282 Braunau am Inn(AT)

(72) Erfinder: Falk, Fiedrich, Mozartstrasse 56,
A-5280 Braunau(AT)
Erfinder: Laimighofer, Johann, Am Stadtbach 32,
A-5280 Braunau(AT)
Erfinder: Oismüller, Helmut, Gregor-Mendel-Strasse 10,
A-1180 Wien(AT)

(74) Vertreter: Hain, Leonhard, Dipl.-Ing., Tal 18/IV,
D-8000 München 2(DE)

## Beschreibung

Die Erfindung betrifft ein Verfahren zum Transport von Mitgepäckstücken auf der Eisenbahn gemäß dem Oberbegriff des Patentanspruches 1.

Ferner betrifft die Erfindung einen Sammelbehälter zur Durchführung dieses Verfahrens sowie einen Eisenbahnwaggon zum Transport dieser Sammelbehälter.

Der Transport der Mitgepäckstücke von Reisenden erfolgt in der Praxis entweder durch Aufgabe des Reisegepäckes am Gepäckschalter des Bahnhofes oder durch die Mitnahme in das Zugabteil des Reisenden. Die Aufgabe des Reisegepäckes am Gepäckschalter ist umständlich und zeitaufwendig, weil sich durch das notwendige Registrieren und Kennzeichnen der Gepäckstücke, insbesondere bei großem Andrang, lange Wartezeiten ergeben, das Bahnpersonal die angenommenen Gepäckstücke hierauf nach den Reisezielen sortieren und schließlich zu unterschiedlichen Abfahrtzeiten zu den Zügen transportieren muß. Sämtliche für einen Reisezug bestimmte Gepäckstücke werden dann von Hand in einen am Reisezug angehängten Gepäckwagen eingeladen, wo die Gepäckstücke in der Reihe ihrer Anlieferung aufeinandergestapelt werden. Nicht weniger aufwendig läuft auch die Abgabe der Gepäckstücke an die Reisenden an den jeweiligen Zielbahnhöfen ab. Da die Gepäckstücke nicht entsprechend den Bahnhöfen vorsortiert sind und erst nach dem Ausladen von Hand und dem Transport zu einer Ausgabestelle an die Reisenden ausgehändigt werden können, stellen sich auch hier meist längere Wartezeiten ein. Unter solchen Verhältnissen ist es verständlich, daß die Reisenden kaum von der auch noch mit Zusatzkosten verbundenen Aufgabe des Reisegepäckes am Bahnhofs-Gepäckschalter Gebrauch machen und eine meist beschwerliche Mitnahme der Gepäckstücke in das Reiseabteil vorziehen, auch wenn sich dadurch Unannehmlichkeiten und Nachteile ergeben, wenn die vorhandenen Ablagen für eine ordentliche Unterbringung der Gepäckstücke nicht ausreichen.

Beim Transport von Postpaketen in einem Eisenbahnwaggon (GB-A 347 016) wurde eine gewisse Vorsortierung von Paketstücken schon dadurch erreicht, daß in einen Eisenbahn-Gepäckwagen auf Schienen einschiebbare Handwagen eingesetzt werden, die nur mit Paketen eines vorgegebenen Bestimmungsortes beladen sind. Am jeweiligen Zielbahnhof kann dann der zutreffende Handwagen wieder aus dem Gepäckwagen heraus- und zum Postschalter gefahren werden. Durch den Einsatz solcher Handwagen wird das Be- und Entladen des Gepäckwagens zwar erleichtert und beschleunigt, für den Transport von Reisegepäck bringt dieser Vorschlag jedoch keine wesentliche Vereinfachung und Verbesserung, weil dadurch die Aufgabe und Abgabe der Gepäckstücke am Gepäckschalter und die damit verbundenen Unannehmlichkeiten nicht vermieden werden. Ein Eisenbahn-Paketwagen zur Aufnahme mehrerer solcher Handwagen ist mit einer Vielzahl von nebeneinander angeordneten Schienenpaaren ausgerüstet, auf denen die Handwagen lagegesichert transportiert werden können.

Zur Unterbringung der Handwagen ist ein Eisenbahnwaggon mit geschlossenem Aufbau erforderlich, an dem zum Ein- und Ausschieben der Handwagen jedem Schienenpaar verschließbare Türen zugeordnet sein müssen, die die Kosten des an sich schon aufwendigen Aufbaues noch mehr erhöhen. Auch das Ein- und Ausschieben der Handwagen erweist sich als beschwerlich und umständlich, weil vorher Auffahrtschienen angebracht werden müssen, die wegen vorgegebener Höhenunterschiede meist sehr steil ansteigen und dadurch das Aufschieben der Handwagen sehr erschweren.

Zum Transport von Paketfracht od. dgl. Versandware wurde auch ein Container bekannt (US-A 1 765 591), der auf einen Eisenbahnwaggon aufgeladen und auf einen Lastkraftwagen umgeladen werden kann. Sein Containerraum ist in eine Vielzahl von einzelnen Abteilen unterteilt, die von der Seite her zugänglich sind und so das Einbringen und Entleeren der verpackten Waren erleichtern. Da diese Abteile voneinander beabstandet sind, kann gekühlte Luft um die Warenstücke zirkulieren, wodurch dieser Container auch zur Kühlung von Waren eingesetzt werden kann. Seine Abteile sind durch Türen oder Klappen abschließbar. Der Containerboden ist zum Abstellen auf dem Boden bzw. auf einer Ladefläche eines Eisenbahnwaggons ausgebildet und zum Verschieben mit Rollen ausgerüstet. Mit diesem in Abteile unterteilten Container soll eine Stapelung der aufzunehmenden Warenpakete und dadurch eine zu hohe Belastung der unteren Pakete vermieden werden. Auch dieser für einen Eisenbahntransport und eine anschließende Überlandzustellung bestimmte Container ist nicht zur Aufnahme und zum Transport von Mitgepäckstücken brauchbar. Der zur Aufnahme solcher Container verwendete Eisenbahnwaggon weist lediglich eine Ladefläche auf, auf die die Container mittels Rollen aufschiebbar und darauf verschiebbar sind.

Der Erfindung liegt daher die Aufgabe zugrunde, ein Verfahren zum Transport von Mitgepäckstücken auf der Eisenbahn vorzuschlagen, durch das vor allem für den Reisenden eine Vereinfachung, Erleichterung und auch Beschleunigung in der Handhabung der Gepäckstücke erreicht wird.

Nach einer weiteren Aufgabe dieser Erfindung ist ein Sammelbehälter zur Durchführung dieses Verfahrens sowie ein Eisenbahnwaggon zur Aufnahme mehrerer Sammelbehälter vorgesehen.

Diese Aufgabe wird mit einem eingangs genannten Verfahren erfindungsgemäß durch die Kennzeichnungsmerkmale des Patentanspruches 1 gelöst.

Die Lösungen gemäß den zusätzlichen Aufgaben zur Schaffung eines Sammelbehälters und eines Eisenbahnwaggons sind durch die Merkmale der Ansprüche 2 bis 6 gekennzeichnet.

Durch das Verfahren gemäß der Erfindung kann der Reisende unbeschwert von seinem Mitgepäck den Aufenthalt in seinem Zugabteil einrichten. Ausschließlich für das Handgepäck der Reisenden ist noch ein Ablageplatz erforderlich. Da die Mitgepäckstücke vor Beginn der Abfahrt in gesonderte Fächer eines Sammelbehälters untergebracht und am Zielbahnhof daraus wieder entnommen werden, werden sich für den Reisenden keine Wartezeiten ergeben, weil mehrere Fächer eines Sammelbehälters gleichzeitig beschickt oder entleert werden können. Außerdem fällt die Kontrolle und Kennzeichnung der Gepäckstücke durch das Bahnpersonal weg.

Ein gemäß der Erfindung ausgebildeter Sammelbehälter zur Durchführung des Verfahrens weist verschließ- und versperrbare Fächer sowie eine Aufnahmevorrichtung für den Transport durch einen Hubstapler auf. Es ist weiterhin möglich, den Sammelbehälter mit Rädern auszustatten und Kupplungen daran anzubringen, wodurch er auch gezogen werden kann.

Auf diese Weise kann die Durchführung dieses Verfahrens mit wenig Personal und in kurzer Zeit bewerkstelligt werden. Weiterhin sind die Mitgepäckstücke durch die absperrbaren Fächer sowohl gegen Diebstahl als auch gegen Beschädigung geschützt.

Für den Transport der Sammelbehälter ist ein eigener Eisenbahnwaggon vorgesehen, der an den Enden seiner Längsseiten Hebebühnen aufweist, mittels der die Sammelbehälter auf den Waggon gehoben werden können.

Im Innern des Waggons ist eine Fördereinrichtung eingebaut, mit der die Sammelbehälter im Waggon bis zu der ihnen zugeordneten Abstellfläche gebracht und dort von der Fördereinrichtung abgehoben und festgehalten werden. Dieses Abheben und Festhalten kann durch parallel zur Fördereinrichtung angeordnete heb- und senkbare Leisten erfolgen, die den Sammelbehälter an seinen zur Waggon-Längsseite parallelen Unterkanten umfaßt und soweit abhebt, daß keine Berührung zwischen dem Sammelbehälter und der Fördereinrichtung mehr stattfindet.

Ein Sammelbehälter und ein Eisenbahnwaggon gemäß der Erfindung werden nachfolgend anhand von Ausführungsbeispielen, die auch in der Zeichnung dargestellt sind, näher beschrieben. Es zeigen:

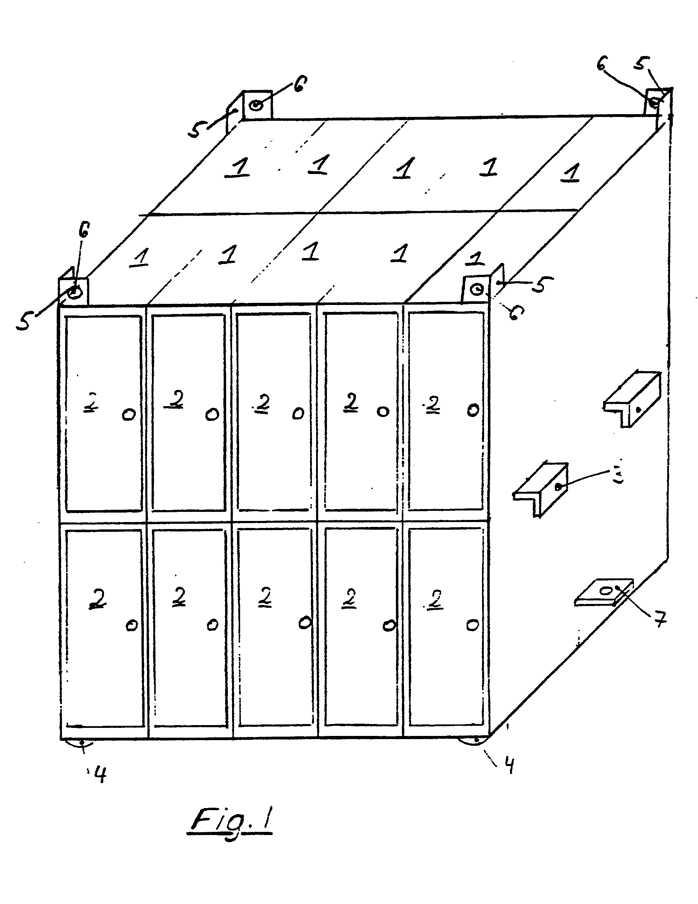

Fig. 1 eine perspektivische Ansicht eines Sammelbehälters,
Fig. 2 einen Eisenbahnwaggon zum Transport der Sammelbehälter und
Fig. 3 und 4 einen Schnitt durch diesen Waggon

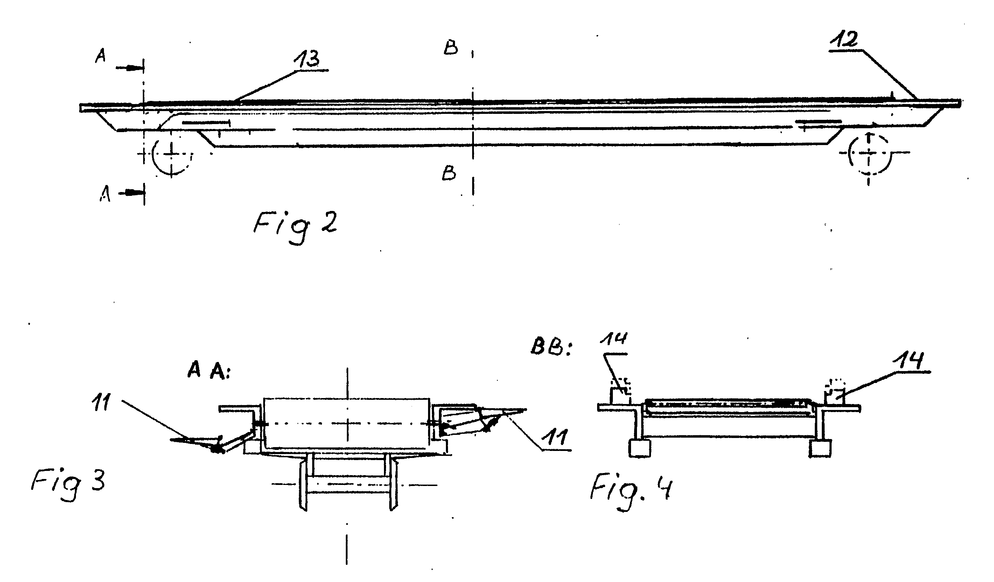

Ein Sammelbehälter zur Durchführung des Verfahrens weist verschiedene Fächer 1 mit Türen 2 auf, die in mehreren Reihen parallel zueinander angeordnet sind. An den senkrecht zu den Türen 2 stehenden Seiten sind Aufnahmen 3 für den Transport durch einen Hubstapler angeordnet und im Bereich der Ecken der Unterseite sind Räder 4 angebracht. An den oberen Ecken der Vorrichtung sind Laschen 5, die ein sicheres Stapeln ermöglichen, vorgesehen. Diese Laschen 5 weisen Ösen 6 auf, um den Sammelbehälter auch mittels eines Kranes befördern zu können. Eine Kupplung 7 ermöglicht ein Ziehen des Sammelbehälters. Der in Fig. 2, 3 und 4 dargestellte Waggon weist im Bereich der Enden seiner Längsseiten Hebebühnen 11 auf, auf die der Sammelbehälter auf die Ladefläche 12 des Waggons gehoben wird. Durch die auf der Ladefläche 12 angebrachte Fördereinrichtung 13 wird der Sammelbehälter bis zu dem für ihn bestimmten Abstellplatz auf der Ladefläche gebracht. Mittels der beweglichen, parallel zur Fördereinrichtung 13 angeordneten Leisten 14 wird der Sammelbehälter von der Fördereinrichtung 13 abgehoben, wobei die zur Wagenlängsseite parallelen Kanten des Sammelbehälters umfaßt werden und dieser somit gegen ein Verschieben während der Fahrt gesichert ist.

## Patentansprüche

1. Verfahren zum Transport von Reisenden mitgeführten Mitgepäckstücken auf der Eisenbahn, wobei die Gepäckstücke am Bahnhof zum getrennten Transport im Reisezug aufgegeben und nach dem Transport in einem Gepäckwagen am Zielbahnhof wieder an die Reisenden ausgehändigt werden, dadurch gekennzeichnet, daß im Bahnhofsbereich ein in Fächer (1) unterteilter Sammelbehälter mit vorgegebener Destination für einen direkten Zugang der Reisenden bereitgestellt wird, die Mitgepäckstücke in die Fächer (1) eingebracht werden, hierauf dieser Sammelbehälter auf einen Waggon des Reisezuges aufgeladen und nach Ankunft am Bestimmungsbahnhof wieder abgeladen wird, worauf die Mitgepäckstücke sodann aus diesem Sammelbehälter an die Reisenden abgegeben werden.

2. Sammelbehälter zur Durchführung des Verfahrens nach Anspruch 1, mit einer Fächerunterteilung zur getrennten Unterbringung von Gegenständen sowie mit einem zum Vorwärtsbewegen mit Rollen ausgerüsteten und zum Aufladen auf einen Eisenbahnwaggon ausgebildeten Gehäuseboden, dadurch gekennzeichnet, daß seine Fächer (1) zur Aufnahme von Mitgepäckstücken vorgegebener Destination ausgebildet sind, die mit verschließ- und absperrbaren Türen (2) ausgestattet und an seinen Seitenwänden Aufnahmen (3) für einen Hubstaplertransport vorgesehen sind.

3. Sammelbehälter nach Anspruch 2, dadurch gekennzeichnet, daß er stapelbar ausgebildet ist und an seinen Oberkanten Laschen (5) gegen ungewolltes Verschieben eines daraufstehenden Sammelbehälters vorgesehen sind.

4. Sammelbehälter nach Anspruch 3, dadurch gekennzeichnet, daß in den Laschen (5) Ösen (6) zum Eingriff eines Kranes ausgebildet sind.

5. Eisenbahnwaggon zum Transport von Sammelbehältern nach einem der Ansprüche 2 bis 4, mit einer zur Aufnahme der Sammelbehälter ausgebildeten Ladefläche (12), dadurch gekennzeichnet, daß in den Endbereichen seiner beiden Längsseiten Hebebühnen (11) zum Anheben der Sammelbehälter auf die Ladefläche (12) vorgesehen sind, auf dieser Ladefläche (12) eine Fördereinrichtung (13) zum Überführen der Sammelbehälter im Waggon bis zu einer zugeordneten Abstellfläche vorhanden ist und zum Erfassen und Anheben der Sammelbehälter an ihren zur Wagenlängsseite parallelen Unterkanten parallel zur Fördereinrichtung heb- und senkbare Leisten (14) angebracht sind.

## Claims

1. A method of transporting items of luggage accompanying travellers on the railway, wherein the items of luggage are checked in at the station for separate transportation in the train and after transportation in a luggage van are handed over again to the travellers at the destination station, characterised in that in the region of the station a collecting container with a predetermined destination, which is subdivided into compartments (1), is made available for direct access by the travellers, the items of luggage are introduced into the compartments (1), thereupon the collecting container is loaded on to a wagon of the train and unloaded again after arrival at the destination station, whereupon the items of luggage are then delivered to the travellers from the collecting container.

2. A collecting container for carrying out the method according to claim 1 with subdivision thereof into compartments for separately disposing articles therein, and with a housing bottom which is provided with rollers for forward movement and which is designed to be loaded on to a railway wagon, characterised in that its compartments (1) are designed to receive accompanying items of luggage for a predetermined destination, which compartments are provided with closable and lockable doors (2), and provided on its side walls are mounting means (3) for fork-lift truck transportation.

3. A collecting container according to claim 2 characterised in that it is designed to be stackable and provided at its upper edges are plates (5) to prevent accidental displacement of a collecting container disposed thereon.

4. A collecting container according to claim 3 characterised in that eyes (6) for the engagement of a crane are provided in the plates (5).

5. A railway wagon for transporting collecting containers according to one of claims 2 to 4 comprising a loading surface (12) designed to receive the collecting containers characterised in that provided in the end regions of its two longitudinal sides are elevating platforms (11) for lifting the collecting containers on to the loading surface, disposed on said loading surface (12) is a conveyor means (13) for transferring the collecting container in the wagon to an associated parking surface, and bars (14) which can be raised and lowered parallel to the conveyor means are mounted for engaging and lifting the collecting containers at their lower edges which are parallel to the longitudinal side of the wagon.

## Revendications

1. Procédé de transport de bagages d'accompagnement de voyageurs par chemin de fer, d'après lequel les bagages sont remis à la gare pour leur transport séparé dans un train de voyageurs et sont restitués aux voyageurs à la gare de destination, après leur transport dans un wagon à bagages, procédé caractérisé en ce qu'est tenu à disposition dans le secteur de la gare un conteneur collectif, divisé en casiers (1), et prévu pour une destination déterminée, auquel les voyageurs ont libre accès, en ce que les bagages sont logés dans les casiers (1), à la suite de quoi ce conteneur collectif est chargé sur un wagon du train, puis déchargé après son arrivée à la gare de destination, et les bagages retirés du conteneur collectif sont restitués aux voyageurs.

2. Conteneur collectif destiné à la mise en oeuvre du procédé selon la revendication 1 et comportant une subdivision en casiers pour le logement séparé d'objets ainsi qu'une base équipée de rouleaux ou roulettes pour les déplacements vers l'avant et constituée aux fins de chargement sur un wagon de chemin de fer, conteneur caractérisé en ce que ses casiers (1) sont constitués pour la réception de bagages d'accompagnement prévus pour une destination déterminée, sont équipés de portes (2) pourvues de fermetures et de verrouillage, et en ce qu'il est prévu, sur ses parois latérales, des éléments de prise (3) pour un transport par chariot élévateur.

3. Conteneur collectif selon la revendication 2, caractérisé en ce que son mode de réalisation en permet l'empilage et en ce qu'il est prévu sur ses arêtes supérieures des attaches (5) pour empêcher un déplacement involontaire d'un conteneur collectif superposé.

4. Conteneur collectif selon la revendication 3, caractérisé en ce que des oeillets (6) sont aménagés dans les attaches (5) pour la prise en charge par une grue.

5. Wagon de chemin de fer pour le transport de conteneurs collectifs selon l'une des revendications 2 à 4, ce wagon comportant une plate-forme (12) de chargement agencée pour recevoir les conteneurs collectifs et étant caractérisé en ce qu'on prévoit, dans la région des extrémités de ses deux côtés longitudinaux, des plate-formes (11) de levage pour soulever les conteneurs collectifs jusqu'à la plate-forme (12) de chargement; en ce qu'il y a, sur cette plate-forme (12) de chargement, un dispositif (13) de manutention pour transférer le conteneur collectif du wagon jusqu'à une surface de dépôt qui lui est destinée et en ce que des bandes (14), pouvant être soulevées et abaissées parallèlement au dispositif de manutention, sont disposées afin de saisir et de soulever le conteneur collectif par ses arêtes inférieures parallèles au côté longitudinal du wagon.

Fig. 1

Fig 2

Fig 3

Fig. 4